# EUROPEAN PATENT APPLICATION

(11) **EP 0 917 379 A1**
(43) Date of publication of application: **19.05.1999**
(21) Application number: 98921841.7
(22) Date of filing: 27.05.1998
(51) Int. Cl.: H04Q 7/20

(54) **MOBILE RADIO COMMUNICATION SYSTEM AND MOBILE RADIO COMMUNICATION TERMINAL**

(30) Priority: 27.05.1997 JP 136834/97
(71) Applicant: KABUSHIKI KAISHA TOSHIBA, Kawasaki-shi, Kanagawa-ken 210-8572 (JP)
(72) Inventor: HAYASHI, Takahisa 232, Kureare-Toshiba-Namiki, Kanagawa-ken 236-0005 (JP); SHIBUYA, Kazutoshi, Hino-shi Tokyo 191-0054 (JP); TAKANO, Koji, Kanagawa-ken 235-0022 (JP); ASANUMA, Yutaka 634, Kureare-Toshiba-Namiki, Yokohama-shi Kanagawa-ken 236-0005 (JP); TAKAHASHI, Hidehiro, Kanagawa-ken 226-0006 (JP)
(74) Representative: Blumbach, Kramer & Partner GbR
(86) International application number: JP9802334
(87) International publication number: WO9854917

(57) **Abstract**

According to the present invention, a paging call signal addressed to mobile communication wireless apparatuses PG1 to PGn and including message data is transmitted from paging transmission stations TS1 to TSm of an existing one-way paging service. In the case where a paging signal addressed to a party of a public network and including message data is transmitted from the mobile communication wireless apparatuses PG1 to PGn, detection is made to see whether the mobile communication radio stations PG1 to PGn are within the radio zones of base stations CS1 to CSj. Upon detection of this, the mobile communication radio stations PG1 to PGn transmit the message data to the public network through the base stations CS1 to CSj.

## Description

### Technical Field

The present invention relates to a mobile communication system wherein a mobile station, such as a pager, can transmit and receive a call signal including message data. The present invention also relates to a mobile station used in that system.

### Background Art

As is well known, in order to realize a two-way paging system, it is necessary to provide both a transmission base station which calls up a pager and a reception base station which receives a transmission signal from the pager. Alternatively, it is necessary to provide a wireless base station having the functions of those two types of base stations.

However, an enormous cost is required if a new reception base station is provided in addition to a transmission base station of an existing one-way paging system, or if the wireless base station described above is provided in place of the transmission base station. Therefore, there is a demand for the development of new technology that enables a two-way paging system at low cost.

If reception base stations are arranged at the same density as high-power transmission base stations each having a wide-area radio zone (macro cell), a pager is required to produce a transmission output of a very high level. Such a pager is inevitably large in size. This problem exists when the wireless base station described above is provided.

A conventional two-way paging system enables data exchange between pagers, but does not permit data to be transmitted from a pager to a communication terminal having no pager function.

### Disclosure of Invention

Accordingly, an object of the present invention is to provide a mobile communication system which can realize a two-way paging system at low cost, and which enables message data to be transmitted to a communication terminal other than a pager. Another object of the invention is to provide a mobile station used in the mobile communication system.

To achieve the object described above, in a mobile communication system according to the present invention, a call signal to a mobile station is transmitted from a transmission base station by way of a first radio channel.

In the case where message data is transmitted from a mobile station to another communication terminal apparatus, a check is first made to see whether the mobile station has entered the radio zone of a base station whose signal reception area is a second radio zone (micro cell), which is smaller than the first radio zone of the transmission station. Upon detection of the entry, the mobile station is connected to the base station and then transmits message data.

In the mobile communication system of this constitution, when a mobile station is called, a transmission base station transmits a call signal. When message data is transmitted from a mobile station to another communication terminal apparatus, a base station forming a small radio zone can be utilized for the transmission of the message data. In comparison with the case where a new reception station for receiving a transmission signal sent from the mobile station is arranged in a macro cell, a two-way paging system can be realized at low cost.

In the mobile communication system of the above constitution, the mobile station can transmit message data by way of the base station. Hence, the mobile station can transmit the message data not only to mobile stations of the same type but also to a variety of communication terminal apparatuses that are connectable to the base station.

In the mobile communication system of the above constitution, the mobile station is connected to the base station when the mobile station is detected as having entered the radio zone of the base station. After the connection, the message data is transmitted to another communication terminal apparatus through the public network.

Even when the radio zone of the base station is small, the message data is automatically sent out in response to the detection of the entry into that radio zone. Hence, the user does not have to wander about in search of an available radio zone when he or she wants to transmit the message data to a desired party. The transmission of the message data is started automatically upon detection of the entry into the radio zone.

According to the present invention, a base station comprises message accumulation/transfer means. This means accumulates message data transmitted from mobile stations and starts transmission of the accumulated message data when the preset time has come or when the number of messages has become the predetermined number.

According to the mobile communication system of the above constitution, the base station does not have to transmit message data each time a message transmission request is made by a mobile station. Hence, an increase in the traffic on the line or channel can be suppressed.

To achieve the object described above, a mobile station according to the present invention receives a call signal, which is related to message data addressed thereto, from a base station apparatus of a one-way paging service.

In the case where message data is transmitted from the mobile station to another communication terminal apparatus, a check is first made to see whether the mobile station has entered the radio zone of a base station apparatus which belongs to a mobile wireless communication service and the reception area of which is a radio zone (micro cell) smaller than the radio zone of the transmission station. Upon detection of the entry, the mobile station is connected to the base station and then transmits message data.

In the mobile communication system of this constitution, the existing one-way paging system is used when message data is received. When message data is transmitted to another communication terminal apparatus, a base station apparatus of a mobile wireless communication service is utilized for the transmission of the message data.

In comparison with the case where a new reception station for receiving a transmission signal sent from the mobile station is arranged in a macro cell, a two-way paging system can be realized at low cost.

In the mobile communication system of the above constitution, message data can be transmitted by way of a base station apparatus of a mobile wireless communication service. Hence, the message data can be transmitted to not only to mobile stations of the same type but also to a variety of communication terminal apparatuses that are connectable to the base station.

In the mobile communication system of the above constitution, the mobile station is connected to the base station apparatus when it is detected as having entered the radio zone of the base station apparatus of the mobile wireless communication service. After the connection, the message data is transmitted to another communication terminal apparatus.

Even when the radio zone of the base station apparatus of the mobile wireless communication is small, the message data is automatically sent out in response to the detection of the entry into that radio zone. Hence, the user does not have to wander about in search of an available radio zone when he or she wants to transmit the message data to a desired party. The transmission of the message data is started automatically upon detection of the entry into the radio zone.

### Brief Description of Drawings

FIG. 1 shows a mobile communication system according to one embodiment of the present invention.
FIG. 2 is a block circuit diagram showing the structure of each of mobile communication wireless apparatuses PG1 to PGn, which are employed in the mobile communication system depicted in FIG. 1.
FIG. 3 shows an example of data which is stored in the transmission message storage area of the storage section of each of the mobile communication wireless apparatuses PG1 to PGn shown in FIG. 2.
FIG. 4 is a block circuit diagram showing the structure of each of base stations CS1 to CSj, which are employed in the mobile communication system depicted in FIG. 1.
FIG. 5 illustrates how the transmission of message data by the mobile communication wireless apparatuses PG1 to PGn shown in FIG. 1 is controlled.
FIG. 6 illustrates how the transmission of message data by the mobile communication wireless apparatuses PG1 to PGn shown in FIG. 1 is controlled.
FIG. 7 illustrates an information transmission path of a mobile communication system according to the present invention.

### Best Mode of Carrying Out the Invention

An embodiment of the present invention will now be described with reference to the accompanying drawings.

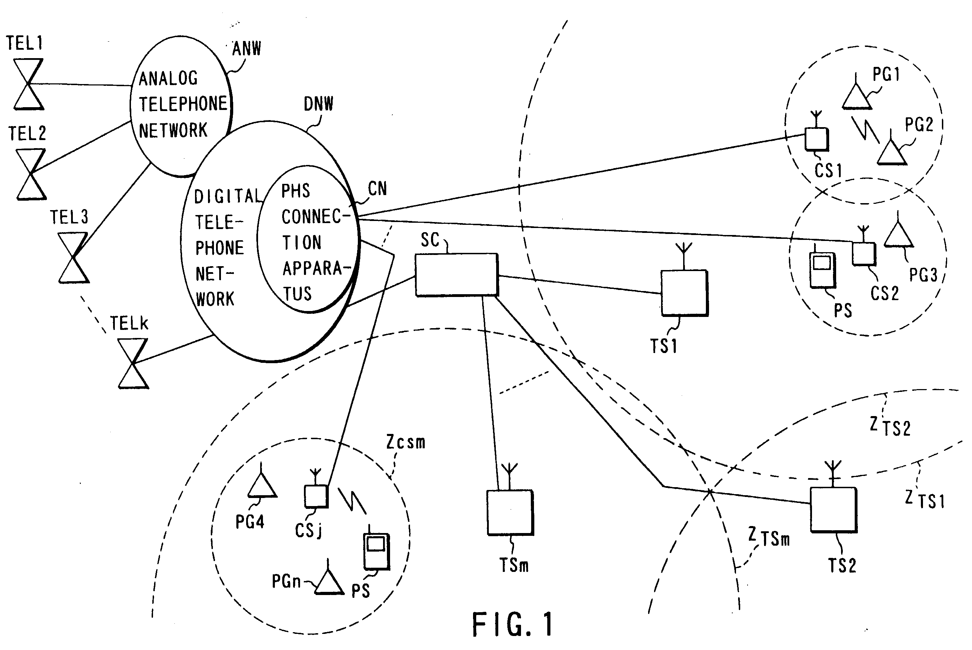

FIG. 1 shows a mobile communication system according to one embodiment of the present invention. In this FIGURE, an analog telephone network ANW and a digital telephone network DNW, such as an ISDN, are shown as public networks.

The mobile communication system shown in FIG. 1 includes a one-way paging system. This system comprises a system controller SC, paging transmission stations TS1 to TSm, and mobile communication wireless apparatuses PG1 to PGn.

The public networks ANW and DNW include subscriber telephones TEL1 to TELk. The digital telephone network comprises a connection apparatus CN, by which base stations CS1 to CSj of small-zone mobile communication systems are controlled.

The system controller SC controls the entire one-way paging system. It receives a request for the transmission of a call signal including message data from the subscriber telephones TEL1 to TELk, which are connected thereto through the analog telephone network ANW or digital telephone network DNW, or from the mobile stations PS of the small-zone mobile communication system through the base stations CS1 to CSj. In accordance with the request, the system controller SC controls the paging transmission stations TS1 to TSm to transmit the call signal to the mobile communication wireless apparatuses PG1 to PGn.

The paging transmission stations TS1 to Tsm are controlled by the system controller SC in the manner described above and transmit the call signal to the mobile communication wireless apparatuses PG1 to PGn.

The mobile communication wireless apparatuses PG1 to PGn receive the call signal sent from the paging transmission stations TS1 to Tsm, and call up the public networks ANW and DNW through the base stations CS1 to CSj. After connection, the message data is transmitted to the connected party.

In FIG. 1, ZTS1 to ZTSm represent the radio zones of the respective paging transmission stations TS1 to TSm, and the radio zones are macro cells having a radius of several kilometers. ZCS1 to ZCSj represent the radio zones of the respective base stations CS1 to CSj, and the radio zones are micro cells having a radius of some hundreds of meters.

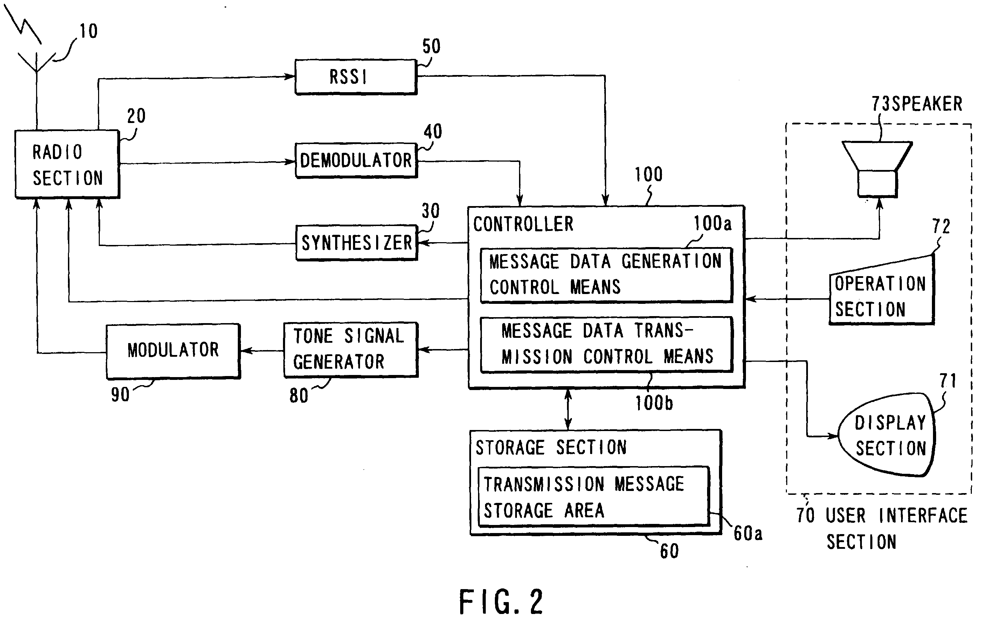

The structure of the mobile communication wireless apparatuses PG1 to PGn will be described with reference to FIG. 2. The mobile communication wireless apparatus shown in FIG. 2 comprises an antenna 10, a radio section 20, a synthesizer 30, a demodulator 40, a reception field intensity detector (RSSI) 50, a storage section 60, a user interface section 70, a tone signal generator 80, a modulator 90 and a controller 100.

A call signal transmitted from the paging transmission stations TS1 to TSm through a radio channel and a control signal periodically transmitted from the base stations CS1 to CSj are received at the antenna 10. The received signals are supplied to the radio section 20.

The radio section 20 intermittently receives the call signal sent from the paging transmission stations TS1 to TSm, and the control signal. The timing of the reception operation is controlled by the controller 100, which will be explained later.

The radio section 20 mixes the received signals with a local signal supplied from the synthesizer 30, so as to change the frequency into an intermediate frequency or a base band frequency. The synthesizer 30 generates a local signal having the frequency designated by the controller 100.

In the transmission mode, the radio section 20 establishes a communication link in accordance with the designation made by the controller 100. The communication link is established with reference to the base stations CS1 to CSj by way of the antenna 10. The frequency of a signal modulated by the modulator 90 (which will be described later) is changed to a radio channel frequency so as to perform communication with reference to the base stations CS1 to CSj by use of the local signal sent from the synthesizer 30. The resultant frequency-changed signal is transmitted to the base stations CS1 to CSj through the communication link.

The demodulator 40 reproduces digital data by demodulating the call signal whose frequency has been changed by the radio section 20. The digital data is supplied to the controller 100.

The RSSI 50 detects the reception field intensity of the control signal received at the radio section 20, in accordance with the designation made by a message data transmission control means 100b of the controller 100 (which will be described later). Data on the detected reception field intensity is supplied to the controller 100.

The storage section 60 includes a semiconductor memory, such as a ROM or a RAM, as its storage medium. This storage medium has an area for storing the control program of the controller 100, an area for storing the ID data on the mobile communication wireless apparatuses, an area for storing a variety of control data, an area for storing a variety of setting data, and an area for storing the received message data. In addition to these areas, the storage section comprises a transmission message storage area 60a.

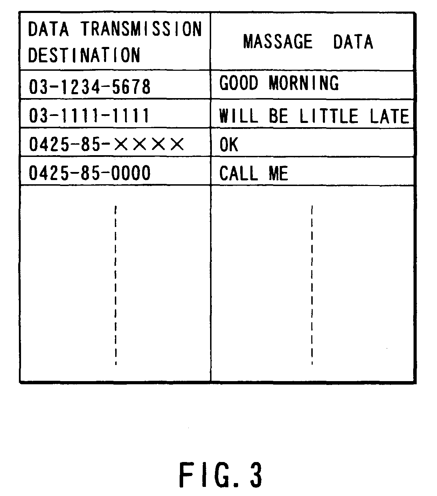

As shown, for example, in FIG. 3, the transmission message storage area 60a is a storage area in which transmission message data prepared by the user is stored in association with the subscriber number to which the transmission message data is addressed.

The user interface section 70 is made up of a display section 71, an operation section 72 and a speaker 73.

The display section 71 is made of an LCD (liquid crystal display). Under the control by the controller 100, the display section 71 visually indicates a received message, the state of the mobile communication wireless apparatus (e.g., the number of messages received, the presence of a message to be read, information representing whether or not a call signal and a control signal can be received), and the data stored in the storage section 60.

The operation section 72 serves as an input interface which receives a request made by the user. The operation section 72 is provided with a plurality of push switches, and these switches are operated so as to enter a variety of setting information, to make a request for the re-display of the received message, and to prepare or send a message.

The speaker 73 is controlled by the controller 100, and outputs a ringing tone amplified by an amplifier (not shown).

The tone signal generator 80 generates a tone signal corresponding to the subscriber number and message data, in accordance with an instruction from the controller 100. The generated tone signal is supplied to the modulator 90.

The modulator 90 modulates a carrier signal by use of the tone signal generated by the tone signal generator 80, and supplies the modulated signal to the radio section 20.

The controller 100 is provided with a microcomputer or the like as its main control unit, and checks the digital data demodulated by the demodulator 40 so as to detect the timing at which a call signal addressed to the mobile communication wireless apparatus is likely to be transmitted.

The controller 100 intermittently controls the reception operation of the radio section 20 in such a manner that the radio section 20 receives the frequency of a call signal at the timing described above. In addition, the controller 100 controls the frequency at which the radio section 20 receives a signal, by controlling the frequency of the local signal generated by the synthesizer 30.

Moreover, the controller 100 compares the ID code included in the digital data received at the above-described timing with the ID code stored in the storage section 60 of the mobile communication wireless apparatus. When the comparison shows that the two ID codes are the same, it is assumed that the mobile communication wireless apparatus is being called. Accordingly, the ringing tone is generated from the speaker 73.

Simultaneous with this, the message code received subsequently to the ID code is decoded after it is subjected to error correction processing. The message data reproduced by the decoding is displayed on the display section 71.

The received message data is stored in the storage section 60 under the control of the controller 100. The message data is read out by operation of the display switch of the operation section 72 under the control of the controller 100, and the readout message data can be re-displayed on the display section 71.

The controller 100 serves to perform the control operation associated with the reception of a call signal, as described above. In addition to this, the controller 100 is provided with a function of controlling the transmission of message data. To attain this function, the controller 100 comprises a message data generation control means 100a and a message data transmission control means 100b.

In response to the user's operation of the operation section 72, the message data generation control means 100a controls the generation of data on a message to be transmitted. The generated data on the transmission message is stored in the transmission message storage area 60a in association with the subscriber number of the party to which the message is addressed.

When the user makes a request for message transmission by operating the operation section 72, the message data transmission control means 100b controls the RSSI 50 to detect the reception field intensity of a control signal received by the radio section 20.

When the level of the reception field intensity indicated by the RSSI 50 is higher than a predetermined level (i.e., when a communication quality level higher than a predetermined level is secured with reference to one of the base stations CS1 to CSj), the message data transmission control means 100b establishes a communication link with reference to the base station that provides the level higher than the predetermined level.

Through the communication link, a call signal is sent to the party identified by the data stored in the transmission message storage area 60a, and the transmission message data is transmitted to that party by way of the base stations CS1 to CSj.

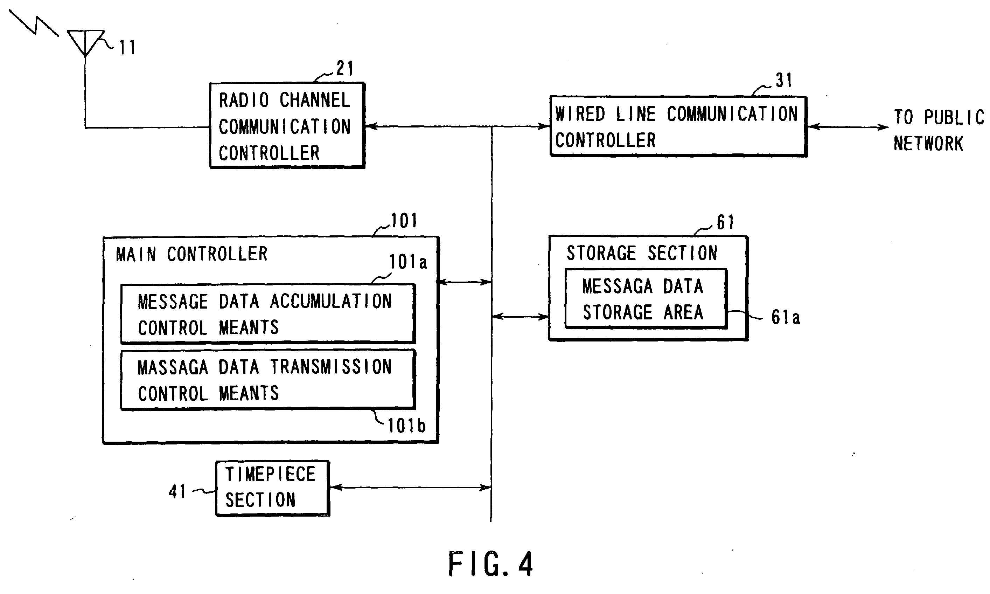

The base stations CS1 to CSj of the small-zone mobile communication systems will be descried with reference to FIG. 4. In the descriptions below, any one of the base stations CS1 to CSj will be referred to by "base station CS."

The base station CS comprises a radio channel communication controller 21 provided with an antenna 11, a wired line communication controller 31, a timepiece section 41, a storage section 61, and a main controller 101.

The radio channel communication controller 21 is controlled by the main controller 101 to be described later, and establishes a radio communication link between a mobile station PS and the mobile communication wireless apparatus PG1 to PGn, over the antenna 1.

Through the digital radio communication link, the radio channel communication controller 21 transmits and receives various kinds of digital data, including voice data, to and from the mobile station PS and the mobile communication wireless apparatuses PG1 to PGn.

The wired line communication controller 31 is controlled by the main controller 101 and has a digital communication line that is connected to the public networks. The wired line communication controller 31 exchanges data, which is transmitted and received over the digital wireless communication link, with reference to the public networks.

The storage section 61 includes a semiconductor memory, such as a ROM or a RAM, as its storage medium. This storage medium stores the control program of the controller 101 and other control data of various kinds, and is provided with a message data storage area 61a.

The message data storage area 61a stores message data which is received from the mobile communication wireless apparatus PG1 to PGn by way of the radio channel communication controller 21.

The timepiece section 41 measures time and informs the main controller 101 of the present time.

The main controller 101 includes a microcomputer, for example, and exercises control over the sections of the base station CS in accordance with the kinds of communication (message exchange or data communication).

The main controller 101 has a function of executing the control operation regarding message exchange and handover. In addition to this, the main controller 101 is provided with another control function by comprising a message data accumulation control means 50a and a message data transmission control means 50b.

In the case where the data that is sent from the connected communication apparatus by way of the radio channel communication controller 21 is message data, the message data accumulation means 50a stores it in the message data storage area 30a in association with the subscriber number of the party to which the message data is to be transmitted.

The message data transmission control means 50b monitors the time data supplied from the timepiece section 41. When the monitored time coincides with the preset time, the message data transmission control means 50b controls the wired line communication controller 31 so as to transmit the message data stored in the message data storage area 30a to the party to which it should be addressed.

Next, the operation of the mobile communication system of the above constitution will be described.

By way of explanation, a description will be given of the case where the user of subscriber telephone TEL1 transmits a call signal including message data to mobile communication wireless apparatus PG1.

The user of subscriber telephone TEL1 operates the dial to enter the subscriber number predetermined in association with the mobile communication wireless apparatus PG1, and connects the subscriber telephone TEL1 to the system controller SC. After this connection, the user operates the dial to transmit tone signals, thereby entering message data.

On the other hand, the system controller SC controls the paging transmission stations TS1 to TSm so as to transmit a selection call signal, which is entered from the subscriber telephone TEL1 and includes message data, to the mobile communication wireless apparatus PG1.

The mobile communication system PG1 determines that the call signal is addressed thereto if the call signal includes ID data identifying the mobile communication system PG1. Hence, the mobile communication system PG1 receives the selection call signal. A ringing tone is generated from the speaker 73, and the message data is displayed on the display section 71.

Next, a description will be given of the case where a call signal including message data is transmitted from one mobile communication wireless apparatus PG1 to another mobile communication wireless apparatus PG2, for paging.

The user operates the operation section 72 to enter the subscriber number of the party to be called and designates the characters or letters to be transmitted. In accordance with this operation, the message data generation control means 100a stores the designated characters or letters in the transmission message storage area 60a described above. The characters or letters are stored as a transmission message in association with the subscriber number.

When, thereafter, the user operates the operation section 72 to request the transmission of the message, the message data transmission control means 100b causes the RSSI 50 to detect the reception field intensity of a control signal received by the radio section 20.

The RSSI 50 informs the controller 100 of the reception field intensity it detects. When the level of the reception field intensity indicated by the RSSI 50 is higher than a predetermined level, the message data transmission control means 100b requests the establishment of a communication link with reference to a connectable one of the base stations CS1 to CSj.

When a reply comes from the base station (CS1 to CSj) that made the request for the establishment of the communication link, the message data transmission control means 100b calls that base station (CS1 to CSj) to establish the communication link by use of the subscriber number stored in the transmission message storage area 60a, i.e., the subscriber number associated with the mobile communication wireless apparatus PG2.

Over the communication link, the message data transmission control means 100b controls the base stations (CS1 to CSj) to read out the message data corresponding to the mobile communication wireless apparatus PG2 from the transmission message storage area 60a. The message data, thus read out, is transmitted, for example, as tone signals generated from the tone signal generator 80.

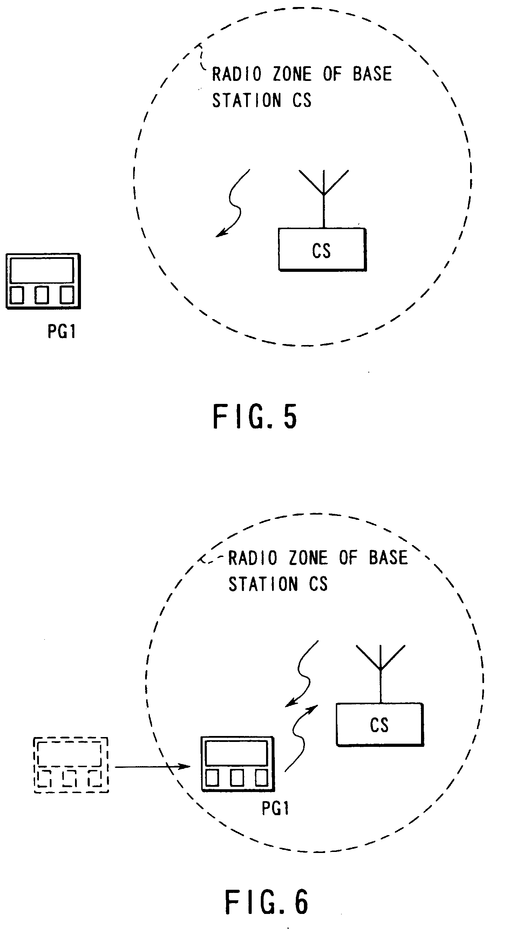

Even when a message transmission request is made by the user, the mobile communication wireless apparatus PG1 does not perform the transmission of message data if it is located outside the radio zone of the base station CS (CS1 to CSj), as shown in FIG. 5. When the mobile communication wireless apparatus PG1 is located within the radio zone of the base station CS, it sends out a call signal through the public network, and then transmits the message data to the called party.

After the transmission of the message data, the mobile communication wireless apparatus PG1 performs the processing for terminating the communication. To be more specific, the communication link with reference to the base station CS (CS1 to CSj) is cut, the RSSI 50 is controlled to stop the operation of detecting the detection field intensity, and the mobile communication wireless apparatus PG1 is set in the standby state, waiting for another transmission request made by the user.

Even in this state, the mobile communication base station PG1 intermittently receives signals so as to monitor the incoming of a selection call signal addressed thereto.

When the base station CS (CS1 to CSj) detects that the mobile communication wireless apparatus PG1 is not ordinary voice communication data but message data, the message data accumulation means 50a records the data in the message data storage area 30a in association with the subscriber number of the party to which the data should be transmitted.

When the preset time comes thereafter, the message data transmission control means 50b controls the wired line communication controller 31 to transmit the message data stored in the message data storage area 30a to the party to which the data should be transmitted.

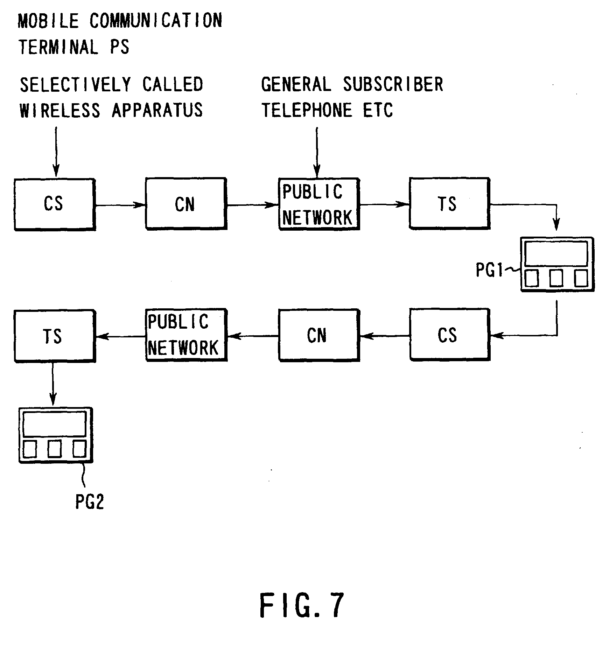

As described above, in the mobile communication system of the above constitution, message data is transmitted to the mobile communication wireless apparatus PG1 by use of the one-way paging system (paging transmission station TS) based on the existing macro cells (large cells), as shown in FIG. 7.

In the case where message data is transmitted from one mobile communication wireless apparatus PG1 to another mobile communication wireless apparatus PG2, data transmission is executed by use of the communication system (base station CS) based on the micro cells (small cells), the zones of which are smaller than those of the one-way paging system.

According to the mobile communication system of the above constitution, the existing system can be used for the transmission and reception of message data. Therefore, in comparison with the case where a new paging reception station is arranged as a micro cell and used exclusively for the paging system, a two-way paging system can be realized at low cost.

In the case where message data is transmitted from the mobile communication wireless apparatuses PG1 to PGn, the data transmission is executed by using the communication system based on the micro cells (small cells). Accordingly, the transmission power required for message data transmission is substantially as low as the power required of a mobile terminal of the system. In other words, it is not necessary to employ large-sized mobile communication wireless apparatuses PG1 to PGn.

Message data is transmitted to a public network through a communication system based on micro cells. Therefore, the message data can be transmitted not only to the mobile communication wireless apparatuses PG1 to PGn but also to facsimile machines and personal computers that are connectable to the public network.

Only when the user requests the transmission of a message, do the mobile communication wireless apparatuses PG1 to PGn receive control signals from the base stations CS1 to CSj. When the required communication conditions are satisfied, the message data is transmitted. Due to this feature, the mobile communication wireless apparatuses PG1 to PGn do not execute unnecessary data transmission when they are outside the service areas of the base stations CS1 to CSj. Hence, the battery is prevented from being wasted.

The present invention is not limited to the embodiment described above. In the above embodiment, the message data transmission control means 50b of each of the stations CS1 to CSj transmits message data stored in the message data storage area 30a when the preset time comes.

Instead of this, the message data transmission control means 50b may monitor the number of message data stored in the message data storage area 30a. In this case, the transmission of message is started when the number exceeds a predetermined value.

In the case of this constitution as well, the base stations CS1 to CSj do not transmit message data each time a request for the transmission of a message is made by the mobile transmission wireless apparatuses PG1 to PGn. Since a number of message data can be transmitted collectively, an increase in the traffic on a public network can be suppressed.

Needless to say, the present invention can be modified in a variety of manners without departing from the spirit and scope of the present invention.

## Claims

1. A mobile communication system comprising:
a transmitting station for transmitting a paging signal to a first radio zone over a first radio channel;
a base station for communicating with a mobile station in a second radio zone which is smaller than the first radio zone over a second radio channel; and
a mobile station including: paging signal receiving means for receiving a paging signal addressed thereto over the first radio channel; radio channel quality detecting means for detecting communication quality with respect to the second radio channel; and message transmitting means, connected to the base station over the second radio channel, for transmitting message data when the communication quality is higher than a predetermined value.

2. A mobile communication system according to claim 1, wherein:
said radio channel quality detecting means detects a reception field intensity relating to the control signal transmitted from the base station; and
said message transmitting means is connected to the base station over the second radio channel and transmits the message data, when the reception field intensity detected by the channel quality detecting means becomes higher than a predetermined value.

3. A mobile communication system according to claim 1, wherein said base station includes message storing means for storing message data transmitted from the mobile station and transmits the storing message data to an addressed terminal to be transmitted when a preset time comes.

4. A mobile communication system according to claim 2, wherein said base station includes message storing means for storing message data transmitted from the mobile station and transmits the storing message data to an addressed terminal to be transmitted when a preset time comes.

5. A mobile communication system according to claim 1, wherein said base station includes message storing means for storing message data transmitted from the mobile station and transmits the storing message data to an addressed terminal to be transmitted when storing message data amounts to a predetermined number.

6. A mobile communication system according to claim 2, wherein said base station includes message storing means for storing message data transmitted from the mobile station and transmits the storing message data to an addressed terminal to be transmitted when accumulated message data amounts to a predetermined number.

7. A mobile communication system according to any one of claims 1 through 6, wherein said transmitting station is a base station included in a one-way paging service which transmits a paging signal to a mobile station.

8. A mobile station in a mobile communication system wherein a transmitting station transmits a paging signal to a first radio zone over a first radio channel, and communicates with a base station over a second radio channel in a second radio zone which is smaller than the first radio zone, said mobile station comprising:
paging signal receiving means for receiving a paging signal addressed thereto over the first radio channel;
radio channel quality detecting means for detecting communication quality with respect to the second radio channel; and
message transmitting means, connected to the base station over the second radio channel, for transmitting message data when the communication quality is higher than a predetermined value.

9. A mobile station according to claim 8, wherein:
said radio channel quality detecting means detects a reception field intensity relating to the control signal transmitted from the base station; and
said message transmitting means is connected to the over the second radio channel and transmits the message data when the reception field intensity detected by the channel quality detecting means becomes higher than a predetermined value.
